# NEUE EUROPÄISCHE PATENTSCHRIFT

(11) **EP 1 205 321 B2**
(45) Veröffentlichungstag und Bekanntmachung des Hinweises auf die Entscheidung über den Einspruch: **15.04.2015**
(45) Hinweis auf die Patenterteilung: 08.10.2008
(21) Anmeldenummer: 01126776.2
(22) Anmeldetag: 09.11.2001
(51) Int. Cl.: B60H 1/22, B60H 1/00

(54) **Klima- und Belüftungsanlage für ein Kraftfahrzeug**
Ventilation and air conditioning apparatus for a motor vehicle
Appareil de ventilation ou de conditionnement d'air pour un véhicule automobile

(30) Priorität: 10.11.2000 DE 10055670; 10.11.2000 DE 10055672; 10.11.2000 DE 10055669
(43) Veröffentlichungstag der Anmeldung: 15.05.2002
(60) Teilanmeldung: 08015242.4
(73) Patentinhaber: Volkswagen Aktiengesellschaft, 38440 Wolfsburg (DE)
(72) Erfinder: Schulze, Werner, Dr., 38531 Rötgesbüttel (DE); Meyer, Manfred, 38474 Tülau (DE); Brück, Stefan, 38442 Wolfsburg (DE)
(74) Vertreter: Pohlmann, Bernd Michael

(56) Entgegenhaltungen:
- DE-A- 3 820 431
- DE-A- 3 940 361
- DE-A1- 19 646 123
- DE-C- 19 708 383
- DE-C- 19 729 899
- DE-C1- 4 311 646
- DE-T2- 69 509 695
- FR-A- 2 659 908
- FR-A- 2 717 747
- FR-A- 2 761 305
- US-A- 4 482 009
- US-A- 4 665 971
- US-A- 6 059 018
- PATENT ABSTRACTS OF JAPAN vol. 012, no. 459 (M-770), 2. Dezember 1988 (1988-12-02) & JP 63 184515 A (NIPPON DENSO CO LTD;OTHERS: 01), 30. Juli 1988 (1988-07-30)

## Beschreibung

Die Erfindung bezieht sich auf eine Klima- und Belüftungsanlage für ein Kraftfahrzeug mit den Merkmalen des Oberbegriffs von Anspruch 1.

Eine derartige Anlage ist aus der DE-A-196 46 123 bekannt.

Sicherheit und Komfort stehen an der Spitze der Anforderungen, die ein Käufer an ein Kraftfahrzeug stellt. Die Klimatisierung des Personenkraftwagens, gilt als ein ausgesprochen typisches Merkmal für Komfort. Das haben auch die Autohersteller erkannt und bieten daher im Rahmen von werbewirksamen Verkaufsaktionen tells schon wahlweise entweder ein Schiebedach oder eine Klimaanlage zum selben Preis. Und so steigt der Anteil der neu zugelassenen Fahrzeuge mit Klimaanlage ständig an, selbst in Mitteleuropa mit meist gemäßigtem Klima. Besonders in der gehobenen Klasse gilt heute die Klimaanlage nahezu als ein Muß bei der Ausstattung. Das muß der Eigentümer spätestens beim Wiederverkauf seines gebrauchten Fahrzeugs feststellen.

Folglich sind Klimaanlagen der eingangs genannten Art schon in vielen Personenkraftwagen der gehobenen, teils schon der mittleren Klasse verwirklicht. Da die Klimaanlage in der Regel vorne, im Bereich der Armaturentafel, angeordnet ist, ergeben sich schon bei vier- und mehrsitzigen Wagen Probleme für die Passagiere im Fond.

Die klimatisierte, also erwärmte oder gekühlte, Luft wird üblicherweise durch einen Fondkanal nach hinten geführt und kann dort an verschiedenen Stellen austreten. Zum Beispiel sind beim Saab 900 die hintere Fußraumbelüftung und die B-Säulenbelüftung an den Fondkanal angeschlossen. Da dort aber eine Absperrmöglichkeit des hinteren Fußraumes fehlt, kann die B-Säulenbelüftung nur im Heizfalle und nicht im Kühlfalle eingesetzt werden, will man eine unangenehme Kühlung der hinteren Passagiere vom Fußraum her vermeiden.

Die klimatisierte Luft wird üblicherweise durch einen Fondkanal nach hinten geführt und kann dort an verschiedenen Stellen austreten zum Beispiel im Fußraum, an der Mittelkonsole durch einen sogenannten Mannanströmer und, auch in Kopfhöhe, aus der B-Säule. Zwar kann in der Regel die austretende Luftmenge gesteuert werden, eine individuelle Veränderung der Lufttemperatur ist jedoch für die Passagiere im Fond nicht vorgesehen.

Andere B-Säulenbelüftungen werden über zusätzliche Kanäle von vorn beaufschlagt, zum Beispiel beim Audi A8 oder bei der Deutschen Patentanmeldung DE 1 96 46123. Dies führt jedoch zu folgendem: Zum ersten verkleinern die zusätzlichen Luftkanäle den nutzbaren Innenraum. Zum zweiten sind im bloßen Kühlfalle die zum Heizen benötigten Fondkanäle ohne Funktion.

Bei klimatisierten Personenwagen der Luxusklasse ist es bekannt, für die Passagiere im Fond ein zusätzliches Klimagerät mit eigenem Verdampfer anzuordnen. Diese Anordnung ermöglicht zwar eine individuelle Steuerung der Temperatur im Fond, führt jedoch durch den enormen Bauaufwand zu einem erhöhten Raumbedarf und zu einer Verteuerung des Fahrzeugs. Daher sind derartige Anordnungen nur als Sonderausstattung und bei großvolumigen und teuren Kraftfahrzeugen zu finden.

Dabei ist es auch bekannt, im Frontbereich der unbehandelten Außenluft Kaltluft, also klimatisierte Luft, beizumischen Diese Zumischung dient insbesondere der Temperaturschichtung und Feinabstimmung im Bereich der Instrumententafel und damit der Komforterhöhung für die Frontinsassen.

Der Erfindung liegt die Aufgabe zugrunde, den Komfort bezüglich der Klimatisierung für die Passagiere im Fond mit geringem Aufwand wesentlich zu verbessern.

Die Erfindung löst diese Aufgabe mit den Merkmalen des Anspruchs 1..

Die Erfindung ermöglicht eine weitgehend individuelle Klimatisierung des Fonds mit nur einem einzigen, im Frontbereich angeordneten Klimagerät:

Im Heizfalle wird die erwärmte Luft optimal genutzt: Zum einen wird sie auf die B-Säulen zur Entfeuchtung der hinteren Seitenscheiben gerichtet, zum anderen dient sie zur angenehmen Erwärmung der hinteren Fußräume. Wärmeverluste, die durch die langen Transportwege der Warmluft von vorne bis in den Fond besonders bei sehr niedrigen Außentemperaturen auftreten, werden durch die Zusatzheizungen ausgeglichen. So kommen auch die Passagiere im Fond in den Genuß einer angenehmen Temperierung selbst bei tiefsten Außentemperaturen.

Im Kühlfalle kann die Luft in den Fond-Luftkanälen nach Wunsch mehr oder weniger aufgeheizt und nach Belieben im Fond verteilt werden: Teils oder ganz in den Fußräumen oder ganz oder teils in den B-Säulenbereichen. Die dann gewünschte Belüftung des Kopfraumes ist sichergestellt. Dabei kann die Luftmenge am B-Säulen-Auslaß in bekannter Weise gesteuert werden. Es erübrigt sich sowohl eine zusätzliche, teure, wartungsbedürftige und raumraubende Klimaanlage, als auch nur ein einziger, zusätzlicher Fondkanal, der letztlich den nutzbaren Innenraum ebenso verringern würde.

Weitere Ausgestaltungen der Erfindung sind in den Unteransprüchen aufgezeigt.

Der Belüftungskomfort wird weiter erhöht, wenn die elektrischen Zusatzheizungen in Stufen oder, besser noch, stufenlos steuerbar sind.

Haben die elektrische Zusatzheizungen PTC-Charakteristik, weist also der Heizleiter einen positiven Temperaturkoeffizienten auf, dann ist neben einer sehr schnellen Aufheizung auch eine sichere Selbstregelung der Heizung gesichert.

Um die Stromversorgung des Kraftfahrzeugs nicht zu überlasten, wird die maximale Leistung der Zusatzheizungen bei üblichen Personenkraftwagen auf 500 Watt beschränkt.

In platz- und raumsparender Weise sind erfindungsgemäß die elektrischen Zusatzheizungen in flachen Luftverteilboxen angeordnet, die in kompakter Bauweise im Bodenbereich unter oder vor den Vordersitzen des Fahrzeugs angeordnet sind. Die Zu- und Abführung der Luft kann dann über flache Kanäle erfolgen, während eine Steuerung der Heizleistung vorzugsweise im Fond im Bereich der Mittelkonsole erfolgen kann.

Die gesamte Heizleistung wird, zum Beispiel bei zweisitzigem Fond, über zwei Fondkanäle auf jede Fondseite aufgeteilt werden, so daß je Seite zum Beispiel 250 Watt zur Verfügung steht. Dann ist auch eine individuelle Steuerung der Heizung und Belüftung im Fuß- und Kopfbereich jedes Fondspassagiers möglich.

Eine höchst individuelle Klimatisierung wird erzielt, wenn das Gebläse und / oder das Klimagerät und / oder die gegebenenfalls vorhandenen Luftsteuerelemente in Stufen oder sogar stufenlos steuerbar ist bzw. sind.

Im folgenden wird die Erfindung anhand einiger Ausführungsbeispiel beschrieben. Es zeigen:
- Fig. 1: die wesentlichen Teile einer Klima- und Belüftungsanlage nach dieser Erfindung in aufgeschnittener, teils vereinfachter Darstellung, mit einem Heizelement im Fondkanal
- Fig.2: eine Weiterbildung der Fig. 1 in aufgeschnittener, vereinfachter Darstellung mit einem Luftkanal zum Abzweigkanal und
- Fig.3: eine weitere Weiterbildung der Fig. 1 in aufgeschnittener, vereinfachter Darstellung mit einer variablen Luftkanalsteuerung von Fondkanal und Abzweigkanal.

Falls nicht ausdrücklich anders gesagt, gilt folgendes für alle Figuren:

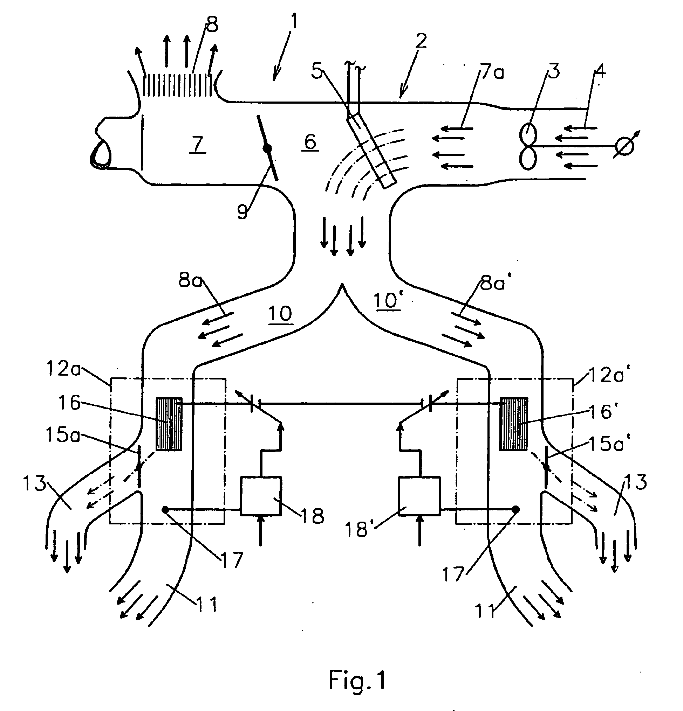

Fig. 1 zeigt die Klima- und Belüftungsanlage 1 nach dieser Erfindung. Diese besteht zunächst aus einem im Bereich der nicht dargestellten Instrumententafel angeordneten Gehäuse 2.

Das Gehäuse 2 umfaßt ein in der Geschwindigkeit in Stufen oder stufenlos steuerbares Gebläse 3 zum Ansaugen von Frischluft 5a und/oder Umluft 4, ein Klimagerät 5 zum Erwärmen oder Kühlen mindestens eines Teils des angesaugten Luftstromes 4 und einen sich daran anschließenden Luftverteilungsraum 6. An den Luftverteilungsraum 6 schließen sich Front-Luftkanäle an, von denen nur der Kanal 7 dargestellt ist, der zu den Defrosteröffnungen 8 an der nicht dargestellten Frontscheibe führt und durch eine Klappe 9 absperrbar ist.

An der strichpunktierten Stelle die Instrumententafel verlassend, führen zwei sehr flache Fond-Luftkanäle 10 und 10' von der nicht dargestellten Mittelkonsole im Boden zum Bereich unter den nicht dargestellten Vordersitzen. Die Luftströme in diesen Fond-Luftkanälen 10 und 10' sind mit 8a und 8a' bezeichnet. Unter jedem Vordersitz ist eine flache Luftverteilbox 12a und 12a' angeordnet. Jede Luftverteilbox 12a und 12a' umfaßt einen Abzweig 13 und 13'. der zur jeweiligen B-Säule führt, sowie einen Abzweig 11 und 11', der zum hinteren linken und rechten Fußraum führt. Des weiteren umfaßt in dieser Ausgestaltung jede Luftverteilbox 12a und 12a' eine Drehklappe 15a und 15a', mittels welcher der zur B-Säule führende Abzweig 13 und 13' teils oder ganz absperrbar ist.

Schließlich ist in jeder Luftverteilbox 12a und 12a' eine elektrische Zusatzheizung 16 und 16' mit 250 Watt Leistung angeordnet. Die elektrische Zusatzheizung 16 und 16' wird über einen Fühler 17 und 17' und über ein Stellglied 18 und 18' gesteuert, das in Griffnähe jedes Fondpassagiers angeordnet sein kann. Durch den positiven Temperaturkoeffizienten des Heizleiters wird die elektrische Zusatzheizung sehr schnell aufgeheizt, ohne daß es zu einer Überhitzung oder Überlastung des Bordnetzes kommen kann.

Will man auf eine völlig individuelle Steuerung der Leistung der Zusatzheizung im Fond verzichten, braucht man für den Fond anders als nach der Erfindung nur eine einzige Zusatzheizung vorzusehen. Diese kann dann zum Beispiel eine Leistung von 500 Watt haben und an der Armaturentafel, siehe strichpunktierte Unterbrechung in der Figur, oder in der Mittelkonsole angeordnet sein, von wo aus die Fondkanäle 10 und 10' dann abzweigen können.

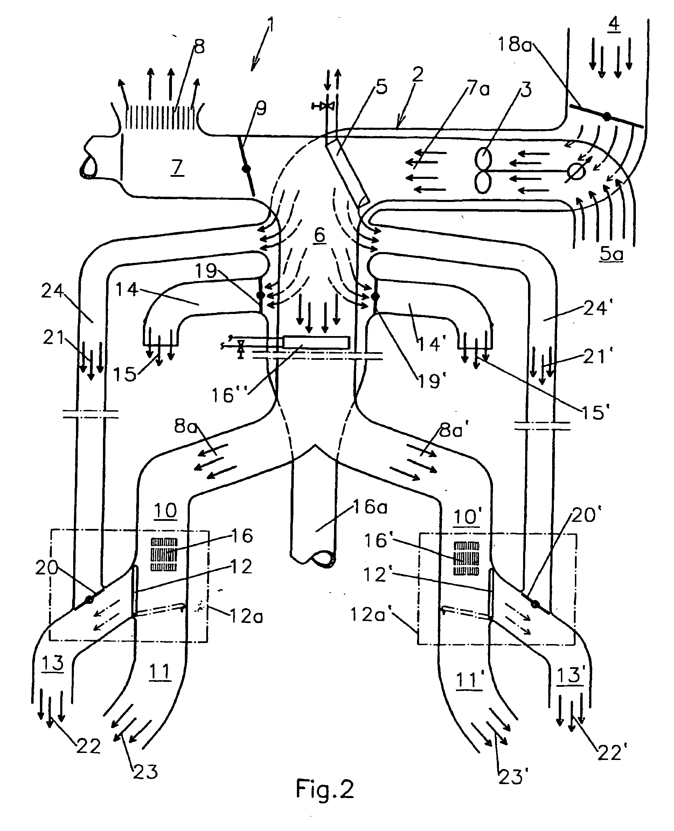

Fig. 2 zeigt eine weitere Ausgestaltung der Klima- und Belüftungsanlage 1 nicht lich nach der Erfindung. Diese besteht aus einem im Bereich der nicht dargestellten Instrumententafel angeordneten Gehäuse 2 und ist analog zu der Beschreibung in Fig. 1 aufgebaut. Abweichend ist hier die elektrische Zusatzheizung 16" vor der Aufspaltung in die Fondkanäle 10 und 10' angeordnet. Optional können die elektrischen Zusatzheizungen 16,16', wie gestrichelt gezeigt in den Fondkanälen 10 und 10' angeordnet sein.
Es soll jedoch ausdrücklich darauf hingewiesen werden, daß für diese Weiterbildung anstelle einer elektrischen Zusatzheizung 16" auch ein Wärmetauscher stromabwärts vom Klimagerät 5 hinter den Abzweigstellen der Kanäle 24,24'; 14,14' für die vom Klimagerät 5 kommen Luft 15,15'; 21,21' angeordnet werden kann. In einer weiteren Weiterbildung kann es sich bei dem Klimagerät 5 auch ausschließlich um den Verdampfer eines Klimageräts handeln.

An den strichpunktierten Stellen die Instrumententafel verlassend, führen zwei Fond-Luftkanäle 10 und 10' über die Mittelkonsole zum Fond. im Fond teilen sich die Luftkanäle 10 und 10' in Abzweigkanäle 11, 13 und 11', 13'. Während die Kanäle 11 und 11' weiter zum hinteren Fußraum führen und dort austreten, führen die Abzweigkanäle 13 und 13' zu den B-Säulen.

Unter Umgehung des Luftverteilungsraumes 6 urd damit des Klimageräts 5, führen zwei weitere im Boden angeordnete Luftkanäle 24 und 24' unbehandelte Luft 21 und 21' bis zu den Abzweigkanälen 13 und 13'. Des weiteren sind im Frontbereich zwei Luftkanäle 14 und 14' vorgesehen, die unbehandelte Luft 15 und 15' in den Frontbereich abgeben. Schließlich führt ein weiterer zentraler Luftkanal 16a in der Mittelkonsole zum Fond, um dort aus der Mittelkonsole unbehandelte Luft ausströmen zu lassen.

Zur Steuerung des Luftdurchsatzes dienen verschiedene Elemente, die hier als zweiflügelige Drehklappen ausgebildet sind, siehe 9, 18a, 19, 19', 20, 20'. Die Drehklappen 20 und 20' dienen zur Zumischung von unbehandelter Luft in die Abzweigkanäle 13 und 13', die zu den nicht dargestellten B-Säulen führen.

Besondere einflügelige Drehklappen 12 und 12' ermöglichen die Zumischung von klimatisierter Luft in die Abzweigkanäle 13 und 13', so daß die aus den B-Säulen austretenden Luftströme 22 und 22' sehr fein abgestimmt werden können: Und zwar für jede Seite völlig unabhängig von der anderen Seite, bezüglich Lufttemperatur und Luftmenge. Desgleichen können die klimatisierten Luftströme 23 und 23' in die hinteren Fußräume gesteuert und auch ganz abgestellt werden.

Optional sind die Drehklappen 12, 12' in einer Luftverteilbox 12a, 12a' angeordnet. Die optional einsetzbaren elektrischen Zusatzheizungen 16,16' sind dann vorzugsweise ebenfalls in der Luftbox 12a, 12a' angeordnet. Dabei sind die elektrischen Zusatzheizungen 16,16 dann vor dem Schwenkbereich der Drehklappen 12, 12' angeordnet.

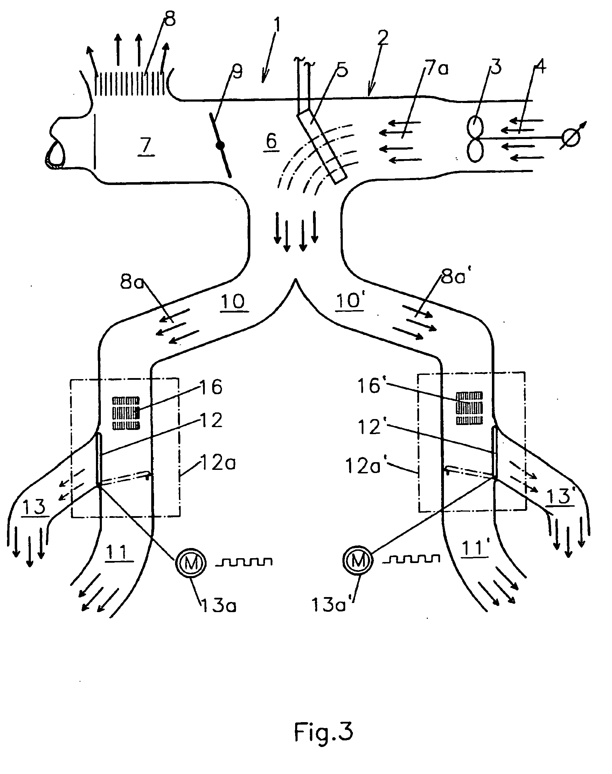

Fig. 3 zeigt eine weitere Weiterbildung der Klima- und Belüftungsanlage 1 nach dieser Erfindung. Diese besteht zunächst aus einem im Bereich der nicht dargestellten Instrumententafel angeordneten Gehäuse 22 und ist anlog zu der Beschreibung in Fig. 1 aufgebaut.

An der strichpunktierten Stelle die Instrumententafel verlassend, führen zwei Fond-Luftkanäle 10 und 10' zunächst über die Mittelkonsole, dann mit sehr flachem Querschnitt im Boden zum Bereich unter den nicht dargestellten Vordersitzen. Die Luftströme in diesen Fond-Luftkanälen 10 und 10' sind mit 10a und 10a' bezeichnet. Unter jedem Vordersitz ist eine flache Luftverteilbox 12a und 12a' angeordnet. Jede Luftverteilbox 12a und 12a' umfaßt einen Abzweig 13 und 13', der zur jeweiligen B-Säule führt, sowie einen Abzweig 11 und 11', der zum hinteren linken und rechten Fußraum führt und eine dieser Abzweigung vorgeschaltete elektrische Zusatzheizung 16,16',

Des weiteren umfaßt jede Luftverteilbox 12a und 12a' eine einflügelige Drehklappe 12 und 12', die über einen Elektromotor 13a und 13a verschwenkbar ist. Über nicht dargestellte, im Fond angeordnete Femschalter kann jeder Elektromotor 13a und 13a' so gesteuert werden, daß jede Drehklappe 12 und 12' verschwenkt werden kann.

Die Verschwenkung kann von der dargestellten Stellung der Drehklappen 12 und 12' - B-Säuten sind ganz abgesperrt, hinterer Fußraum ist voll belüftet - bis zur strichpunktierten Stellung - B-Säulen sind voll belüftet, hinterer Fußraum ist ganz abgesperrt - entweder stufenlos oder in Stufen vorgenommen werden.

Wenn hingegen auf jeden Fall eine Mindestbelüftung der Abzweige 13, 13' oder 11, 11' gewünscht wird, dann kann z. B. die Verschwenkung der Drehklappen 12 und 12' so begrenzt werden, daß sie nicht ganz schließen. Oder die Drehklappen 12 und 12' bzw. die abzuschließenden Abzweige 13,13', 11, 11' werden im Querschnitt so geformt, daß ein völliges Verschließen des offenen Querschnitts durch die Drehklappen 12 und 12' nicht möglich ist. Ein derart gewünschter offener Restquerschnitt könnte z.B. zu einer Restbelüftung von 5 bis 10% führen.

### BEZUGSZEICHENLISTE

- 1: Klima- und Belüftungsanlage
- 2: Gehäuse
- 3: Gebläse
- 4: Frischluft
- 5a: Umluft
- 5: Klimagerät (Kälte- / Wärmetauscher)
- 6: Luftverteilungsraum
- 7: Kanal
- 7a: Luftstrom
- 8: Defrosteröffnungen
- 8a: Luftstrom
- 8a': Luftstrom
- 9: Drehklappe
- 10: Fond-Luftkanal
- 10': Fond-Luftkanal
- 11: Abzweig
- 11': Abzweig
- 12: Drehklappe
- 12': Drehklappe
- 12a: Luftverteilbox
- 12a': Luftverteilbox
- 13: Abzweigkanal
- 13': Abzweigkanal
- 13a: Elektromotor
- 13a': Elektromotor
- 14: Luftkanal
- 14': Luftkanal
- 15: unbehandelte Luft
- 15': unbehandelte Luft
- 15a: Drehklappe
- 15a': Drehklappe
- 16: elektrische Zusatzheizung
- 16': elektrische Zusatzheizung
- 16": elektrische Zusatzheizung
- 16a: Luftkanal
- 17: Fühler
- 17': Fühler
- 18: Stellglied
- 18': Stellglied
- 18a: Drehklappe
- 19: Drehklappe
- 19': Drehklappe
- 20: Drehklappe
- 20': Drehklappe
- 21: unbehandelte Luft, Kaltluft
- 21': unbehandelte Luft, Kaltluft
- 22: Luftstrom
- 22': Luftstrom
- 23: Luftstrom
- 23': Luftstrom
- 24: Luftkanal
- 24': Luftkanal

## Patentansprüche

1. Klima- und Belüftungsanlage (1) eines Kraftfahrzeugs,
mit einem im Bereich der Instrumententafel angeordneten Gehäuse (2), das umfasst ein Gebläse (3), mit dem Frisch- und / oder Umluft (4) ansaugbar ist,
ein Klimagerät (5) mit dem mindestens ein Tell des angesaugten Luftstroms (4) erwärmbar oder kühlbar ist,
einen im Anschluss an das Klimagerät (5) geteilten Luftverteilungsraum (6),
von dem aus mindestens ein Front-Luftkanal (7) abgeht,
**dadurch gekennzeichnet, dass**
von dem Luftverteilungsraum ein rechter Fond-Luftkanal (10') und ein linker Fond-Luftkanal (10) abgeht, mit denen ein Fond-Fußraum und B-Säulen belüftbar sind;
Luftsteuerelemente (9, 15) zur Steuerung der Luftmenge in diesen Luftkanälen (7, 10, 10') vorgesehen sind;
eine rechte Luftverteilbox (12a'), der Luft durch den rechten Fond -Luftkanal (10') zuführbar ist,
im Bodenbereich unter einem rechten Vordersitz angeordnet ist und
in der eine rechte elektrische Zusatzheizung (16') angeordnet ist, wobei
die rechte Luftverteilbox (12a') einen ersten Abzweig (13') aufweist, der zu einer rechten B-Säule führt, sowie einen zweiten Abzweig (11') aufweist, der zu einem hinteren rechten Fußraum führt;
eine linke Luftverteilbox (12a), der Luft durch den linken Fond -Luftkanal (10) zuführbar ist
im Bodenbereich unter einem linken Vordersitz angeordnet ist,
in der eine linke elektrische Zusatzheizung (16) angeordnet ist, wobei
die linke Luftverteilbox (12a) einen ersten Abzweig (13) aufweist, der zu einer linken B-Säule führt, sowie einen zweiten Abzweig (11) aufweist, der zu einem hinteren linken Fußraum führt.

2. Klima- und Belüftungsanlage nach Patentanspruch 1,
**dadurch gekennzeichnet, dass**
die Leistung der elektrischen Zusatzheizung (16, 16') in Stufen oder stufenlos steuerbar ist.

3. Klima- und Belüftungsanlage nach Patentanspruch 1 oder 2,
**dadurch gekennzeichnet, dass**
die elektrische Zusatzheizung (16, 16') PTC-Charakteristik aufweist.

4. Klima- und Belüftungsanlage nach Patentanspruch 1 bis 3,
**dadurch gekennzeichnet, dass**
die maximale Leistung der Zusatzheizungen (16, 16') 500 Watt beträgt.

5. Klima- und Belüftungsanlage nach Patentanspruch 1 bis 4,
**dadurch gekennzeichnet, dass**
jeder Fondseite eine Zusatzheizung (16, 16') von maximal 250 Watt zugeordnet ist.

6. Klima- und Belüftungsanlage nach Patentanspruch 1 bis 5,
**dadurch gekennzeichnet, dass**
das Gebläse (3) und / oder das Klimagerät (5) und/oder die Luftsteueretemente (9, 15) in Stufen oder stufenlos steuerbar ist bzw. sind.

## Claims

1. Air-conditioning and ventilation system (1) of a motor vehicle having a housing (2) which is arranged in the region of the instrument cluster, comprising
a fan (3) with which fresh and/or recirculated air (4) can be sucked in,
an air-conditioning unit (5) with which at least some of the sucked-in air flow (4) can be heated or cooled,
an air distributing space (6) which splits up downstream of the air-conditioning unit (5) and from which proceeds at least one front air duct (7),
**characterized in that**,
from the air distributing space, there proceed one right-side rear air duct (10') and one left-side rear air duct (10) via which a rear footwell and B pillars can be fed with air;
air control elements (9, 15) are provided for controlling the air flow rate in said air ducts (7, 10, 10');
a right-side air distributing box (12a') to which air can be supplied through the right-side rear air duct (10')
is arranged in the floor region under a right-side front seat and
has arranged therein a right-side electrical auxiliary heater (16'), wherein
the right-side air distributing box (12a') has a first branch (13'), which leads to a right-side B pillar, and has a second branch (11'), which leads to a rear right-side footwell;
a left-side air distributing box (12a) to which air can be supplied through the left-side rear air duct (10)
is arranged in the floor region under a left-side front seat and
has arranged therein a left-side electrical auxiliary heater (16), wherein
the left-side air distributing box (12a) has a first branch (13), which leads to a left-side B pillar, and has a second branch (11), which leads to a rear left-side footwell.

2. Air-conditioning and ventilation system according to Patent Claim 1, **characterized in that** the power of the electrical auxiliary heater (16, 16') can be controlled in steps or in a stepless fashion.

3. Air-conditioning and ventilation system according to Patent Claim 1 or 2, **characterized in that** the electrical auxiliary heater (16, 16') has PTC characteristics.

4. Air-conditioning and ventilation system according to Patent Claim 1 to 3, **characterized in that** the maximum power of the auxiliary heaters (16, 16') is 500 Watts.

5. Air-conditioning and ventilation system according to Patent Claim 1 to 4, **characterized in that** each side of the rear is assigned an auxiliary heater (16, 16') of a maximum of 250 Watts.

6. Air-conditioning and ventilation system according to Patent Claim 1 to 5, **characterized in that** the fan (3) and/or the air-conditioning unit (5) and/or the air control elements (9, 15) can be controlled in steps or in a stepless fashion.

## Revendications

1. Installation de climatisation et de ventilation (1) d'un véhicule automobile comprenant un boîtier (2) disposé dans la région du tableau de bord, comprenant
une soufflante (3) avec laquelle l'air frais et/ou l'air de recirculation (4) peut être aspiré,
un appareil de climatisation (5) avec lequel au moins une partie du flux d'air aspiré (4) peut être réchauffée ou refroidie,
un espace de distribution d'air (6) divisé à la suite du raccordement à l'appareil de climatisation (5), duquel sort au moins un canal d'air avant (7), **caractérisée en ce que**
de l'espace de distribution d'air partent un canal d'air de fond droit (10') et un canal d'air de fond gauche (10) avec lesquels un espace de fond pour les pieds et des colonnes B peuvent être ventilés ;
des éléments de commande d'air (9, 15) sont prévus pour commander la quantité d'air dans ces canaux d'air (7, 10, 10') ;
une boîte de distribution d'air droite (12a') à laquelle de l'air peut être acheminé à travers le canal d'air de fond droit (10') est disposée dans la région de fond sous un siège avant droit et un chauffage auxiliaire électrique droit (16') est agencé dans ladite boîte de distribution d'air droite,
la boîte de distribution d'air droite (12a') présentant une première ramification (13') qui conduit à une colonne B droite, ainsi qu'une deuxième ramification (11') qui conduit à un espace arrière droit pour les pieds ;
une boîte de distribution d'air gauche (12a) à laquelle de l'air peut être acheminé à travers le canal d'air de fond gauche (10) est disposée dans la région de fond sous un siège avant gauche et un chauffage auxiliaire électrique gauche (16) est agencé dans ladite boîte de distribution d'air gauche,
la boîte de distribution d'air gauche (12a) présentant une première ramification (13) qui conduit à une colonne B gauche ainsi qu'une deuxième ramification (11) qui conduit à un espace arrière gauche pour les pieds.

2. Installation de climatisation et de ventilation selon la revendication 1, **caractérisée en ce que** la puissance du chauffage auxiliaire électrique (16, 16') peut être commandée par échelons ou en continu.

3. Installation de climatisation et de ventilation selon la revendication 1 ou 2, **caractérisée en ce que** le chauffage auxiliaire électrique (16, 16') présente une caractéristique CTP.

4. Installation de climatisation et de ventilation selon l'une quelconque des revendications 1 à 3, **caractérisée en ce que** la puissance maximale des chauffages auxiliaires (16, 16') est de 500 Watt.

5. Installation de climatisation et de ventilation selon l'une quelconque des revendications 1 à 4, **caractérisée en ce que** chaque côté du fond est associé à un chauffage auxiliaire (16, 16') de 250 Watt au maximum.

6. Installation de climatisation et de ventilation selon l'une quelconque des revendications 1 à 5, **caractérisée en ce que** la soufflante (3) et/ou l'appareil de climatisation (5) et/ou les éléments de commande d'air (9, 15) peut ou peuvent être commandés par échelons ou en continu.
